# EUROPEAN PATENT APPLICATION

(11) **EP 4 796 793 A1**
(43) Date of publication of application: **26.08.2026**
(21) Application number: 23952960.5
(22) Date of filing: 20.12.2023
(51) Int. Cl.: F15D 1/00, B64C 23/00, B64C 1/00, B64C 30/00

(54) **DEVICE FOR REDUCING THE DRAG OF AN OBJECT MOVING INSIDE A FLUID**

(30) Priority: 20.09.2023 CO 23012391
(71) Applicant: Rodriguez, Luis Alirio, Bogotá (CO); Rodríguez Gómez, Diego Luis, Bogotá (CO); Rodríguez Gómez, Rossi Alejandra, Bogotá (CO)
(72) Inventor: Rodriguez, Luis Alirio, Bogotá (CO); Rodríguez Gómez, Diego Luis, Bogotá (CO); Rodríguez Gómez, Rossi Alejandra, Bogotá (CO)
(74) Representative: Isern Patentes y Marcas S.L.
(86) International application number: PCT/IB2023/063029
(87) International publication number: WO 2025/062178

(57) **Abstract**

The present invention relates to a device for reducing the drag of an object moving inside a fluid, the device comprising a conduit that runs internally through the object from a front end to a rear end thereof. It may have a constant diameter throughout the same or increase from the inlet to the outlet in a divergent manner. It may have at least one straight or spiral-shaped groove. The conduit may branch toward two outlets that are arranged laterally or vertically. The cross-section may be circular, ovoid, polyhedral, etc. The inlet may have a gate closure system or similar. It reduces the parasitic drag of the object. It is mainly applicable to aircraft.

## Description

### FIELD OF INVENTION

The present invention relates to the field of object design, particularly of objects that move inside fluids, to minimize the drag caused by friction of the fluid against the exterior surfaces of the object.

### BACKGROUND OF THE INVENTION

Drag is a force caused by friction between a fluid and a surface. This friction causes distortions in the ideally laminar flow that should exist between the surface of an object moving inside the fluid and the surrounding fluid. These distortions exert a force that opposes the object's motion inside the fluid, requiring greater energy expenditure to keep the object moving.

Distortions form low-pressure vortices, where the fluid moving inside the vortex exerts a force on the moving object that is opposite to the object's direction of motion. Distortions are caused by imperfections or elements located on the object's surface, which ideally should be completely smooth to prevent the formation of these distortions.

The drag caused by these distortions is known as paroxysmal drag, and its incidence is directly proportional to the object's speed inside the fluid. In denser fluids, distortions form more regularly as the object's speed increases, reaching a point where they begin to cause cavitation, strongly impacting the object's displacement inside the fluid.

In less dense fluids, cavitation does not occur, but the distortions gradually grow in frequency and size as the speed of the object increases, exponentially increasing the energy consumption needed to keep the object moving at the desired speed.

To reduce the risk of parasitic drag, objects moving through a fluid are designed to minimize the number of surface elements that could affect the laminar motion of the fluid over the object's surface, particularly at high speeds. However, it is not possible to eliminate it completely, and parasitic drag is a constant problem in industry.

In the prior art, we find several documents that seek to reduce the drag generated by air movement over the surfaces of an aircraft. For example, U.S. Patent No. 3,776,489 teaches a structure for eliminating sonic booms developed by the main substructures of a supersonic aircraft based on the selective positioning of the aircraft's exhaust gases, air inlets and outlets, and the ducts between the inlets and outlets. A supersonic aircraft utilizing the structure is disclosed in which the main substructures of the aircraft incorporate the positioning of the exhaust gases, inlets, outlets, and ducts between the inlets and outlets.

On the other hand, U.S. Patent No. 6,612,524 teaches a front body for an aeronautical vehicle. The front body includes an exterior wall having a first half and a second half. The first half has a first porous section, and the second half has a second porous section. The first half and the second half also have a first exterior side experiencing a first fluidic pressure and a second exterior side experiencing a second fluidic pressure, respectively. A hollow internal cavity is fluidly coupled to the first exterior side and the second exterior side and allows fluid passage between the first exterior side and the second exterior side through the first porous section, the internal cavity, and the second porous section. The exterior wall equalizes the first fluidic pressure with the second fluidic pressure. Additional front bodies and methods of making the same are also provided.

Finally, patent application US 2010/0206038 teaches a method of manufacturing a surface that will reduce fluid flow resistance over exposed surfaces of aerodynamic or hydrodynamic structures. The surface will define a plurality of dimples. The dimples may not be aligned. Adjacent dimples may not have the same diameter.

However, the presence of parasitic drag is a constant problem in industry, for any object that moves inside a fluid, as it increases energy consumption and reduces the distance it can travel.

### BRIEF DESCRIPTION OF THE FIGURES

Figure 1. Corresponds to a perspective view of a first embodiment of a device of the present invention, arranged in an aircraft.
Figure 2. Corresponds to a top view of a first embodiment of a device of the present invention, arranged in an aircraft.
Figure 3. Corresponds to a perspective view of a second embodiment of a device according to the present invention.
Figure 4. Corresponds to a top view of a second embodiment of a device of the present invention, arranged in an aircraft.
Figure 5. Corresponds to a view of different types of duct configurations according to different embodiments of the present invention.
Figure 6. Corresponds to a view of a device for closing the entrance of a duct according to an embodiment of the present invention.

### DESCRIPTION OF THE INVENTION

A detailed description of the subject matter of the present invention will now be provided. For the purposes of the present specification, the following definitions are provided:
A "fluid" refers to any material capable of behaving as such, whether in liquid, gaseous, or both forms. When the present invention refers to an "object," it refers to a land vehicle, a projectile, an aircraft, a rocket, a boat, a submarine, a torpedo, or any other object whose shape is designed to move efficiently inside a fluid.

It is an object of the present invention to provide a device for minimizing parasitic drag caused by flow disturbances of a fluid over the surface of an object moving therein.

It is a second objective of the present invention to provide a device that improves the displacement of an object through a fluid.

It is a third objective of the present invention to reduce the shock caused when an object moving inside a fluid exceeds the speed of sound in said fluid.

These and other objectives will become apparent to the average technician skilled in the art in light of the teachings of the present specification.

According to one embodiment of the present invention, the device for reducing drag caused by the displacement of an object inside a fluid comprises a duct that runs through the interior of the object from the front end to the rear end thereof.

Said duct may have a circular, ovoid, polyhedral cross-section, or a combination thereof. Said duct has an inlet end located at the front of the object and an outlet end located at the rear of the object.

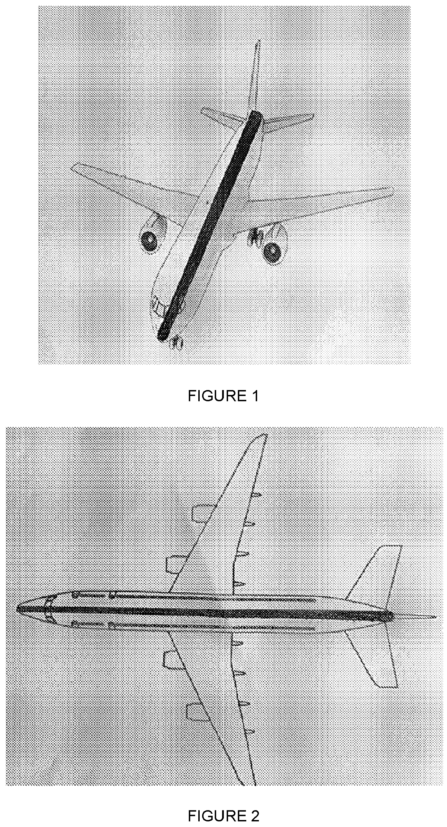

As shown in Fig. 1, the duct according to the present invention has its inlet end located at the tip of the nose of the object, which for this example is an aircraft, and its outlet end at a point on the rear of the object that is directly opposite the inlet end.

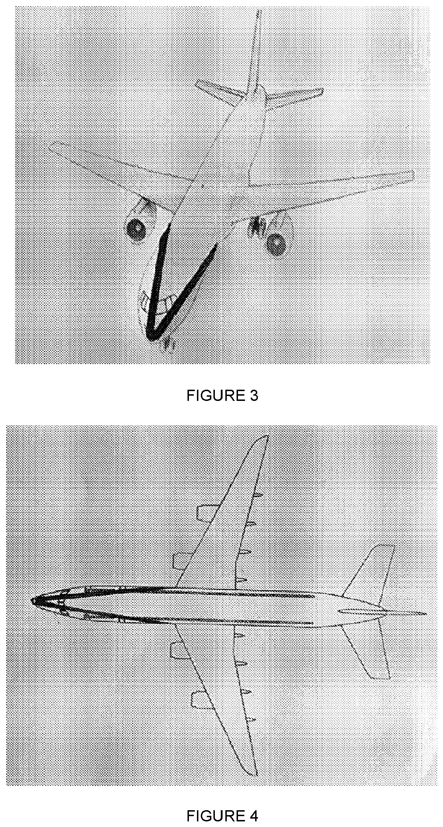

In an alternative embodiment, shown in Fig. 3, the duct branches approximately between the inlet and up to approximately 1/3 L of the object and the outlets are located at a point located between 1/3 L and 1/2 L of the branching point, where L is the total length of the object. Said outlets can be located on the sides of the object, at the same height as the duct inlet, or at a point that is above or below an imaginary plane that horizontally bisects the duct inlet, wherein the outlet is located between 2R and 5R above or below said plane, where R is the radius of the duct outlet and the distance is measured from the plane to the closest point of the outlet to said plane.

The duct according to the present invention has a diameter (D) between 0.5% and 5% of the total diameter (DT) of the object's body. The diameter (D) of the duct must be large enough to prevent the Venturi effect, which would cause the fluid, at the object's maximum displacement, to be unable to enter the tube, thus nullifying its efficiency.

In one embodiment, the duct's internal surfaces are completely smooth. A smooth surface is one with a Reynolds number less than 2300, low enough to ensure constant laminar flow along the entire duct at the speed at which the object is traveling.

In an alternative embodiment of the present invention, the duct comprises at least one internal groove which has a spiral pattern, or is completely straight. In one embodiment, the internal groove has a clockwise rotational direction; in another embodiment, the spiral rotates counterclockwise. The groove has a width (A) of no more than 3 mm and a depth of no more than 1 mm. The spiral groove runs around the internal perimeter of the duct once every 1/5 L or 1/2 L. When the duct comprises more than one groove, they are parallel to each other, separated by between 1.5A and 3A from each other, where the separation distance is measured from a first edge of a groove to the edge of the adjacent groove closest to said first edge.

In one embodiment, shown in Figs. 3 and 4, the object comprises at least two ducts that run parallel through the interior of the object, along the sides thereof.

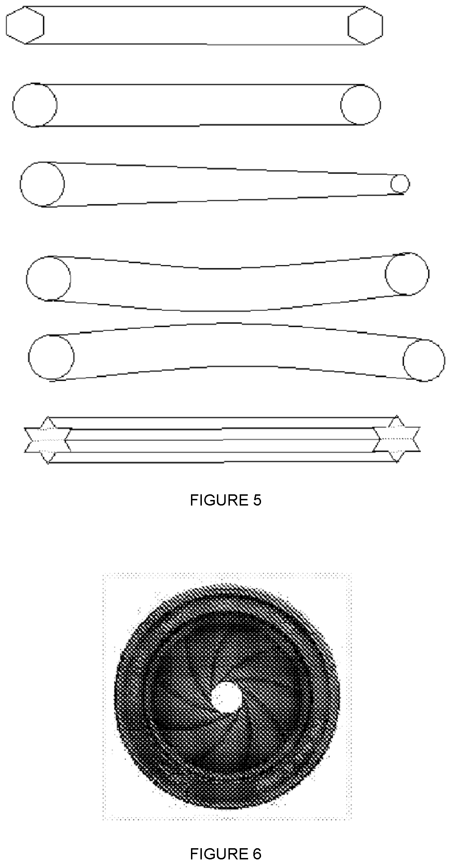

In one embodiment, shown in Fig. 5, the duct has a circular inlet and an oval, polygonal, or rhombohedral outlet, which allows the fluid flow to be redirected over the surface of the object's body to ensure a laminar flow and a more homogeneous detachment of the fluid from the object's body.

In one embodiment, shown in Fig. 5, the duct inlet diameter is between 5% and 15% smaller than the duct outlet diameter, which allows for thermal expansion of the fluid within the duct, preventing the formation of excessively turbulent flow within the duct, which can ultimately reduce the fluid's ability to flow through the duct. In such an embodiment, the outlet diameter is no more than 20% larger than the inlet diameter.

In one embodiment, shown in Fig. 6, the duct has an access closure system at the inlet, which may be a gate, a shutter, a valve, or a similar element known in the art. Said closure system serves to prevent the entry of foreign elements into the duct when the object moves through a region where there are a large number of such elements. These elements may include things such as, for example, but not limited to, plant debris, garbage, birds, fish, etc.

The implementation of a duct according to the embodiments described above and those claimed in the attached claims set, has the advantage of reducing the natural resistance of the object when passing through the fluid, caused by parasitic drag and other forms of drag. This resistance reduction also achieves the advantageous technical effect of reducing the energy consumption required by the object to move inside the fluid, which results in savings in the fuel needed to generate said energy.

Although a description of some of the embodiments of the invention has been provided so far, it is not intended to be limiting. It will be apparent to the person skilled in the art that a large number of modifications and variations can be made to the subject matter recited herein without departing from the spirit of the present invention. The object and scope of the present application are defined solely by the appended claims.

## Claims

1. Device for reducing the drag of an object moving inside a fluid, **characterized in that** it consists of at least one duct that runs internally through the object from a front end to a rear end thereof, wherein the duct has a constant diameter between 0.5% and 5% of the diameter of the object, where said duct has a circular cross section and a smooth inner surface with a Reynolds number less than 2300.

2. Device according to claim 1, **characterized in that** the inlet diameter of the duct is between 5% and 15% smaller than the outlet diameter of the duct, which allows thermal expansion of the fluid within the duct.

3. Device according to claim 1, **characterized in that** the duct comprises at least one internal groove which is completely straight.

4. Device according to claim 3, **characterized in that** the internal groove is spiral-shaped, has a clockwise rotation direction, has a width of no more than 3 mm and a depth of no more than 1 mm, and the spiral-shaped groove runs around the internal perimeter of the duct once every 1/5 to 1/2 of its length.

5. Device according to claim 1, **characterized in that** the duct has an access closure system at the entrance, which may be a gate, a shutter, a valve or a similar element known in the art.

6. Device according to claim 1, **characterized in that** the duct branches approximately between the inlet and up to approximately 1/3 L of the object and the outlets are located at a point located between 1/3 L and 1/2 L of the branching point.

7. Device according to any of the preceding claims, **characterized in that** one has an ovoid, polyhedral cross-section or a combination thereof.

8. Device according to any of the preceding claims, **characterized in that** the duct has a circular inlet and an oval, polygonal, or rhombohedral outlet, which allows the fluid flow to be redirected over the surface of the object's body to ensure a laminar flow and a more homogeneous detachment of the fluid from the object's body.
